# EUROPÄISCHE PATENTANMELDUNG

(11) **EP 0 743 488 A2**
(43) Veröffentlichungstag der Anmeldung: **20.11.1996**
(21) Anmeldenummer: 96105982.1
(22) Anmeldetag: 17.04.1996
(51) Int. Cl.: F23H 3/02, F23H 1/02, F23H 17/00

(54) **Gekühlter Rostblock**

(30) Priorität: 17.05.1995 CH 447/95
(71) Anmelder: Von Roll Umwelttechnik AG, CH-8500 Zürich (CH)
(72) Erfinder: Hauser, Rolf, 8627 Grüningen (CH)
(74) Vertreter: Patentanwälte Schaad, Balass, Menzl & Partner AG

(57) **Zusammenfassung**

Zur Kühlung eines Rostblocks (6'), der einen Teil eines Rostes für Anlagen zur thermischen Behandlung von Abfall bildet, wird im Innern eines Blockkörpers (20') des Rostblocks (6') unterhalb einer den Abfall tragenden oberen Wand (23') ein geschlossener Kühlraum (27') mit Kühlwasser gefüllt, der von unten von einem mit einer Isolationsschicht (50) versehenen Boden (28') dichtend verschlossen ist. Es findet eine wirksame, die Temperaturen stark herabsetzende Kühlung der thermisch am stärksten belasteten Teile des Rostblocks (6') statt. Da Wärmedehnungen im Material entfallen, können nur wenige miteinander verschraubte Rostblöcke (6') eine Rostblockreihe bilden. Die Montage und Rostblockwechsel sind einfacher, der unerwünschte Rostdurchfall zwischen den Rostblöcken (6') weitgehend eliminiert. Ausserdem können die Rostblöcke (6') aus billigerem Material hergestellt werden.

## Beschreibung

Die Erfindung betrifft einen gekühlten Rostblock gemäss dem Oberbegriff des Anspruches 1.

In herkömmlichen Abfallverbrennungsanlagen wird bekannterweise der Abfall auf einem Rost durch einen Feuerungsraum gefördert und dabei getrocknet und verbrannt. Der Rost sorgt neben der Transportfunktion auch für ständige Durchmischung des Abfalls, so dass immer wieder neue Abfalloberflächen der thermischen Behandlung im Feuerungsraum ausgesetzt werden. Zu diesem Zweck weist eine Rostbahn mehrere treppenartig hintereinander angeordnete Rostblockreihen auf, wobei jeweils abwechselnd ortsfeste und bewegliche Rostblockreihen einander folgen. Das sich auf dem Rost befindende Abfallmaterial, beispielsweise Müll, wird durch eine Schubbewegung der beweglichen Rostblockreihen vorwärtsgeschoben und gleichzeitig durchgemischt. Eine Rostblockreihe wird jeweils durch mehrere, in der Regel 16 bis 24 Rostblöcke gebildet, die nebeneinander an einem Halterohr eingehängt und mittels einer Zugstange miteinander verspannt werden. Die einzelnen Rostblöcke werden mittels durchströmender Luft gekühlt, die bei Verbrennungsrosten gleichzeitig als ein für die Verbrennung notwendiges Oxidationsmittel dient.

Trotz der Luftkühlung werden die Rostblöcke einer hohen thermischen Beanspruchung ausgesetzt, die starke Wärmespannungen im Material der Rostblöcke zur Folge hat. Es können sich Risse im Material bilden, wodurch die Korrosionsgefahr ansteigt. Die Rostblöcke müssen aus hochwertigem Material, beispielsweise aus hochlegiertem Stahl hergestellt werden. Wegen den grossen Wärmedehnungen ist die Grösse der einzelnen Rostblöcke limitiert; es ist eine relativ grosse Anzahl Rostblöcke in einer Rostblockreihe nötig. Es ist dabei von Nachteil, dass durch die Spalten zwischen den einzelnen Rostblöcken entstanden durch mehrmaliges Ausdehnen und Zusammenschrumpfen durch unterschiedliche Blocktemperaturen hervorgerufen durch den Verbrennungsablauf sowie An- und Abfahren des Ofens gewisse Anteile des zu verbrennenden Abfalls durchfallen, die dann unverbrannt in die Schlacke gelangen. Werden zwei oder drei Rostbahnen nebeneinander verwendet, so müssen nicht nur auf der Aussenseite eines solchen Rostes, sondern auch zwischen den Rostbahnen Halterungen für die Zugstangen und Abdichtungen für die Leckluft angeordnet werden. Der Wechsel einzelner Rostblöcke ist somit kompliziert und beansprucht lange Servicezeiten.

Der vorliegenden Erfindung liegt die Aufgabe zugrunde, bei möglichst effizienter Kühlmittelanwendung die thermische Beanspruchung des Rostblocks zu senken und einen montage- und wartungstechnisch einfacheren Aufbau eines Rostes zu ermöglichen, der dennoch auch betriebstechnisch allen Anforderungen besser standhält.

Diese Aufgabe wird erfindungsgemäss durch die im Kennzeichen des Anspruches 1 angegebenen Merkmale gelöst.

Die durch die Erfindung erzielten Vorteile sind insbesondere in der wirksamen Kühlung zu sehen, wodurch Wärmespannungen und Wärmedehnungen im Rostblock weitgehend eliminiert werden. Somit können nur wenige, breitere Rostblöcke - miteinander in einfacher Weise verbunden - eine Rostblockreihe bilden. Dadurch wird nicht nur die Montage und Wechsel einfacher, sondern auch der Rostdurchfall bedeutend reduziert. Dabei kann der Rostblock auch aus weniger hochwertigem Material hergestellt werden.

Die Erfindung wird nun anhand der Zeichnung näher erläutert.

Es zeigen:
- Fig.1: ein Ausführungsbeispiel eines Rostblocks im vertikalen Querschnitt;
- Fig.2: einen Teil eines Blockkörpers von unten gesehen.

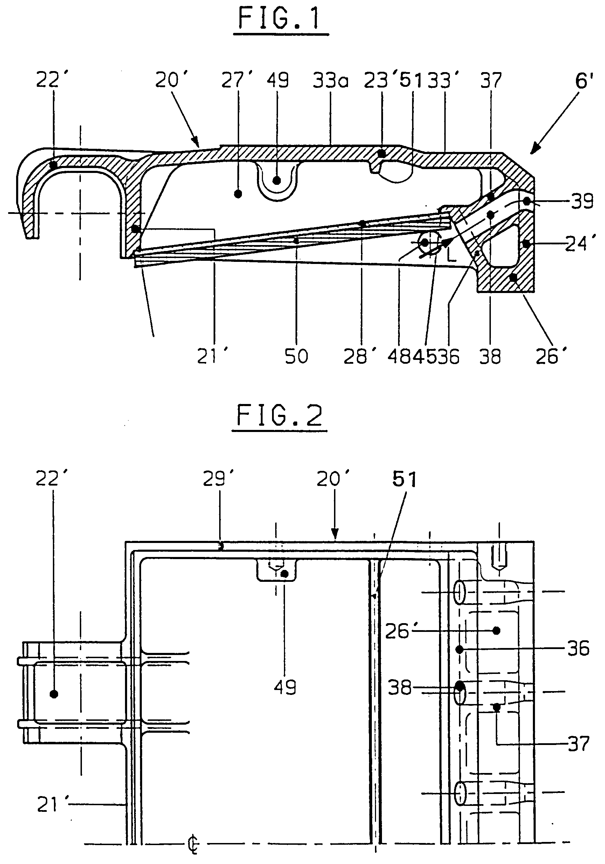

In Fig.1 ist im vertikalen Querschnitt ein Rostblock 6' als Teil eines Rostes für eine Anlage zur thermischen Behandlung von Abfall dargestellt. In einer an sich bekannten und in der Zeichnung nicht näher dargestellten Weise werden jeweils mehrere Rostblöcke 6 in einer Rostblockreihe nebeneinander angeordnet und miteinander sowie mit zwei Seitenplatten verbunden. Mehrere treppenartig angeordnete Rostblockreihen bilden dann ein Rostelement, wobei abwechselnd eine ortsfeste Rostblockreihe und eine bewegliche Rostblockreihe einander folgen. Eine in der Zeichnung ebenfalls nicht dargestellte Rostbahn setzt sich dann aus mehreren Rostelementen zusammen; in der Regel werden drei bis fünf Rostelemente hintereinander angeordnet. Ausserdem können mehrere Rostbahnen nebeneinander angebracht werden; üblicherweise bilden eine bis vier Rostbahnen die Breite des Rostes. Die Anzahl der Rostelemente und der Rostbahnen hängt von der vorgegebenen Durchsatzmenge des Abfalls und von dessen Heizwert ab.

Ein vorzugsweise als ein Gussteil hergestellter Blockkörper 20' des Rostblocks 6' weist gemäss Fig.1 und 2 im wesentlichen einen U-förmigen Querschnitt auf, dessen obere Wand mit 23', hintere Wand mit 21' sowie vordere Wand mit 24' bezeichnet sind. Die hintere Wand 21' ist mit mindestens zwei über die Rostblockbreite verteilten Haken 22' ausgestattet, über welche der Rostblock 6' an einem nicht dargestellten Blockhalterrohr eingehängt wird (aus Fig.2 ist nur einer der beiden Haken 22' ersichtlich). Die vordere Wand 24' weist unten einen Fuss 26' auf. Der Fuss 26' eines Rostblocks 6' ist jeweils einem mittleren Teil 33a der Aussenfläche 33' der oberen Wand 23' eines nachfolgenden Rostblocks 6' zugeordnet; sie sind jeweils gegenseitig relativ verschiebbar. Die Aussenfläche 33' der oberen Wand 23' bildet eine Nutzfläche, auf der der zu behandelnde Abfall zu liegen kommt und entlang welcher er durch die relative Schubbewegung der beweglichen und der festen Rostblockreihen transportiert wird. Auf der Innenseite ist die obere Wand 23' mit einer sich über die Rostblockbreite erstreckenden Versteifung 51 gegen Durchbiegung versehen.

Der Blockkörper 20' ist ferner mit einer an den Fuss 26' angrenzenden, gegebenenfalls schräg ins Blockinnere gerichteten Wand 36 ausgestattet, die über mehrere über die Rostblockbreite gleichmässig verteilte Düsen 37 mit der vorderen Wand 24' verbunden ist. Die schräg angeordneten Düsen 37 sind mit Öffnungen 38 versehen, die im Bereich der vorderen Wand 24' einen abgewinkelten Austrittteil 39 aufweisen. Durch die Öffnungen 38 wird von unten in Richtung eines Pfeiles L (Fig.1 ) beispielsweise Luft als ein für die Verbrennung notwendiges Oxidationsmittel dem zu verbrennenden Abfall zugeführt.

Der Blockkörper 20' weist zwei Seitenwände 29' auf, die mit je einem Schraubenloch 48 ausgestattet sind, über welche die Rostblöcke 6' miteinander vorzugsweise verschraubt werden. Ausserdem sind die Seitenwände 29' mit Laschen 49 ausgestattet, über welche die Rostblöcke 6' mit den bereits erwähnten, in der Zeichnung nicht dargestellten Seitenplatten verbunden, beispielsweise verschraubt werden können. Es werden jeweils die äussersten Rostblöcke 6' jeder festen Rostblockreihe mit den Seitenplatten verschraubt.

Die hintere Wand 21' ist unten mit einer Absatzfläche 44 versehen; auch im oberen Bereich der schrägen Wand 36 ist eine Absatzfläche 45 angefertigt. An den Absatzflächen 44,45 ist ein mit einer Isolationsschicht 50 versehener Boden 28' (beispielsweise aus Blech angefertigt) dichtend befestigt, gegebenenfalls eingeschweisst.

Somit wird im Innern des Blockkörpers 20' ein Kühlraum 27' gebildet und durch den Boden 28' verschlossen gehalten, der über in der Zeichnung nicht dargestellte Kaltwasser-Zufuhrleitungen und Warmwasser-Abfuhrleitungen an ein Kaltwasser-Niederdrucksystem bzw. an ein geschlossenes Kühlwassersystem mit einem eingebauten Wärmeaustauscher angeschlossen ist. Die Anordnung entsprechender Wasserleitungen im Kühlraum wird im Schweizerischen Patentgesuch Nr. 3452/94; A 10599 ausführlich behandelt.

Bei der erfindungsgemässen Wasserkühlung einzelner Rostblöcke 6' können dank den günstigeren Wärmeübergangszahlen vom Wasser im Vergleich zur Luft die mittlere Temperaturwerte am Rost wesentlich reduziert werden. Bewegten sich diese Werte bei Luftkühlung etwa zwischen 350°C - 700°C, so konnten sie durch die Wasserkühlung auf ca. 50° - 100°C gesenkt werden. Die hohen thermisch bedingten Spannungen und Dehnungen im Material, die bei luftgekühlten Rostblöcken 6' üblich waren, entfallen bei der erfindungsgemässen Wasserkühlung. Dadurch können problemlos im Gegensatz zu früheren Rostausführungen wenigere (drei bis vier), breitere Rostblöcke 6' nebeneinander in einer Rostblockreihe angeordnet werden und die Breite der Rostbahn bilden. Die bisherige Verspannung durch Zugstangen erübrigt sich ebenfalls; die Rostblöcke 6' einer Rostblockreihe können in einfacher Weise miteinander verschraubt werden. Bei Mehrbahn-Rosten entfallen somit auch die bisher notwendigen Halterungen für die Zugstangen zwischen den einzelnen Bahnen. Dadurch ist ein eventueller Wechsel von Rostblöcken 6' wesentlich vereinfacht und beansprucht kürzere Servicezeiten. Zudem war der Wechsel bei den früheren, hohen Temperaturen öfter, beispielsweise alljährlich, nötig. Ein wesentlicher Vorteil liegt erfindungsgemäss auch darin, dass durch die Verwendung von wenigen Rostblöcken 6' bzw. durch Wegfallen von Spalten der Rostdurchfall erheblich reduziert wird; die Gefahr, dass beispielsweise Buntmetalle oder Staub durch den Rost fallen und unverbrannt in die Schlacke gelangen, ist bedeutend geringer.

Durch die niedrigeren Temperaturen und die niedrigere thermische Beanspruchung des Rostblocks 6' ist weitgehend auch die Gefahr eliminiert, dass durch Wärmespannungen Risse im Material entstehen, die die Korrosion begünstigen. Somit kann die Verwendung von weniger hochwertigem Material für die Rostblöcke 6' in Betracht gezogen werden.

Durch die Anordnung einer Isolationsschicht 50 aussen am den Kühlraum 27' nach unten abschliessenden Boden 28' werden erfindungsgemäss zusätzlich die ansonsten durch den Temperaturunterschied zwischen den im Kühlraum 27' einerseits und den unterhalb des Rostes anderseits herrschenden Temperaturen hervorgerufenen Wärmespannungen im Boden 28' vermieden. Dadurch kann die Lebensdauer des gesamten Rostblocks 6' erhöht werden. Ausserdem wird die Kühlkapazität nicht unnötig zur Kühlung des unteren, nicht in direktem Kontakt mit dem verbrennenden Abfall stehenden, dennoch unter relativ hohen Temperatur stehenden Rostblockbodens abgegeben, sondern zum grössten Teil zur Kühlung des thermisch am stärksten belasteten, oberen und vorderen Teil des Rostblocks 6' bzw. des Blockkörpers 20' ausgenützt. Diese Massnahme ist besonders dann von Vorteil, wenn aus einem bestimmten Grunde (beispielsweise für Abfall eines niedrigeren Heizwertes) vorgewärmte Luft von unten durch die Öffnungen 38 dem Abfall zugeführt wird. Auf die nun normalerweise in einem solchen Fall folgende Erhöhung des Kühlwassermenge-Umsatzes und daraus resultierende Erhöhung der Kühlkapazität kann erfindungsgemäss verzichtet werden. Ohne dass das Kühlsystem entsprechend geändert bzw. der Durchsatz an Kühlmitteln verstärkt wird, kann durch eine einfache, jedoch beim Rostbau für Verbrennungsanlagen durchaus unübliche konstruktive Massnahme, nämlich durch das Anbringen einer Isolationsschicht an einem Teil des Rostblocks 6' der gesamte Bedarf an Kühlmitteln zur Rostblockkühlung gesenkt werden.

Beim dargestellten, bevorzugten Ausführungsbeispiel des Rostblocks 6' ist die Isolationsschicht 50 aussen am Boden 28' angebracht. Es kann sich dabei beispielsweise um eine vorzugsweise ca 20 mm dicke Schicht Minerallwolle handeln, die durch Kleben oder mittels mechanischer Befestigungsmittel (Schrauben, Nieten u.a.) mit dem Boden 28' verbunden ist. Es wäre aber auch denkbar, eine korrosionsfreie Isolationsschicht an der Innenseite des Bodens 28' anzubringen und somit den Boden 28' gänzlich aus dem Kühlsystem auszuklammern; allerdings müsste in einem solchen Fall den von den Temperaturen unterhalb des Rostes abhängigen Wärmedehnungen im Boden 28' Rechnung getragen werden.

Ausser geklebten oder mechanisch befestigten Isolationsschichten könnten auch aufgespritzte Wärmedämmschichten in Erwägung gezogen werden.

## Patentansprüche

1. Gekühlter Rostblock als Teil eines Rostes für eine Anlage zur thermischen Behandlung von Abfall, mit einer oberen Wand (23'), deren Aussenfläche (33') eine Nutzfläche bildet, auf der der zu behandelnde Abfall zu liegen kommt und entlang welcher der Abfall durch Relativbewegung einander nachgeschalteter Rostblöcke transportiert wird, dadurch gekennzeichnet, dass die obere Wand (23') als Teil eines Blockkörpers (20') einen im Blockkörper (20') gebildeten, an ein Kühlwassersystem angeschlossen Kühlraum (27') oben begrenzt, der von unten durch einen mit einer Isolationsschicht (50) versehenen Boden (28') dichtend verschlossen ist.

2. Gekühlter Rostblock nach Anspruch 1, dadurch gekennzeichnet, dass der Blockkörper (20') einen an eine vordere Wand (24') anschliessenden Fuss (26') aufweist, der hinten mit einer ins Blockkörperinnere gerichtete Wand (36) verbunden ist, wobei der Boden (28') einerseits an einer Absatzfläche (44) einer hinteren Wand (21') des Blockkörpers (20') und anderseits an einer Absatzfläche (45) der ins Blockkörperinnere gerichteten Wand (36) befestigt ist.

3. Gekühlter Rostblock nach Anspruch 2, dadurch gekennzeichnet, dass die ins Blockkörperinnere gerichtete Wand (36) über mehrere der Rostblockbreite entlang gleichmässig verteilte, den Kühlraum (27') durchdringende Düsen (37) mit der vorderen Wand (24') verbunden ist, wobei die beiden Wände (36,24') sowie die Düsen (37) mit durchgehenden Öffnungen (38 bzw. 39) versehen sind.

4. Gekühlter Rostblock nach einem der Ansprüche 1 bis 3, dadurch gekennzeichnet, dass die Isolationsschicht (50) an der Aussenseite des Bodens (28') angebracht ist.

5. Gekühlter Rostblock nach einem der Ansprüche 1 bis 4, dadurch gekennzeichnet, dass sich die Isolationsschicht (50) über die ganze Fläche des am einstückigen Blockkörper (20') befestigten Bodens (28') erstreckt.

6. Gekühlter Rostblock nach Anspruch 4 oder 5, dadurch gekennzeichnet, dass die Isolationsschicht (50) durch eine Mineralwollenschicht gebildet ist.

7. Gekühlter Rostblock nach Anspruch 6, dadurch gekennzeichnet, dass die Isolationsschicht (50) eine Dicke von ca. 15 bis 25 mm aufweist.

8. Gekühlter Rostblock nach Anspruch 6 oder 7, dadurch gekennzeichnet, dass die Isolationsschicht (50) an den Boden (28') geklebt ist.

9. Gekühlter Rostblock nach Anspruch 6 oder 7, dadurch gekennzeichnet, dass die Isolationsschicht (50) am Boden (28') mechanisch befestigt ist.

10. Gekühlter Rostblock nach einem der Ansprüche 1 bis 5, dadurch gekennzeichnet, dass die Isolationsschicht (50) durch eine auf den Boden (28') aufgespritzte Wärmedämmschicht gebildet ist.
